# EUROPEAN PATENT APPLICATION

(11) **EP 2 934 026 A1**
(43) Date of publication of application: **21.10.2015**
(21) Application number: 14741075.7
(22) Date of filing: 20.01.2014
(51) Int. Cl.: H04W 4/10, H04W 76/02, H04W 76/06

(54) **BROADBAND CLUSTER COMMUNICATION SYSTEM, AND RESOURCE RELEASE AND ESTABLISHMENT METHOD THEREOF, TERMINAL, AND BASE STATION**

(30) Priority: 21.01.2013 CN 201310021503
(71) Applicant: ZTE Corporation, Shenzhen, Guangdong 518057 (CN)
(72) Inventor: ZHENG, Cuihua, Shenzhen Guangdong 518057 (CN)
(74) Representative: Cabinet Laurent & Charras
(86) International application number: PCT/CN2014/070919
(87) International publication number: WO 2014/111057

(57) **Abstract**

Disclosed are a resource release method and a resource establishment method of a broadband cluster communication system, a terminal and a base station in the broadband cluster communication system, and the broadband cluster communication system, wherein the resource release method includes: a user who accesses a group call but has no speaking right reporting a terminal state to the base station (S201); and according to a terminal state reporting situation of users without speaking right in a cell where group resources have been established, the base station judging whether there is a user without speaking right in the cell or not, and if no, releasing downlink shared channel resources shared by all the users without speaking right in the cell (S202).

## Description

### Technical Field

The present invention relates to the field of cluster communication technology, and more particularly, to a resource release method and a resource establishment method of a broadband cluster communication system, a terminal and a base station in the broadband cluster communication system, and the broadband cluster communication system.

### Background of the Invention

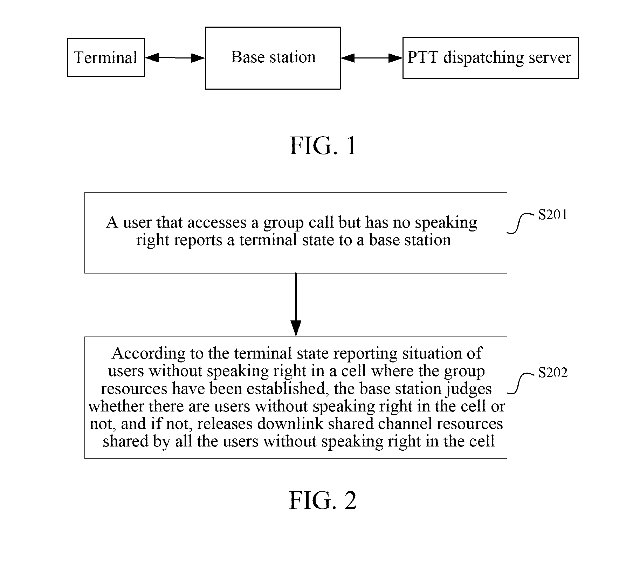

As shown in FIG. 1, the broadband cluster communication system based on the long-term evolution (called LTE) technology is a system expanded on the basis of the LTE system with combination of the private cluster system to achieve the cluster capability, and mainly consists of the PTT Dispatching Server (referred to as PDS), the evolved universal territorial radio access network (E-UTRAN) base station (E-UTRAN node B or evolved node B, abbreviated to as eNB) which is integrated with the cluster capability, and the cluster User Equipment (abbreviated to as UE) and other devices to achieve the one-to-many half-duplex broadband cluster communication. The UE forwardly monitors and receives signaling and service data sent by the shared channel to achieve related services, and reversely sends the random access signaling; the eNB forwardly receives, processes and forwards the PDS signaling and service data to the UE, and reversely receives, processes or forwards the UE signaling to the PDS; the PDS is the central point of signaling and services, and receives and forwards service data of the user with speaking right to the eNB where all users without speaking right are located, and centralized processes service signalings of the users with or without the speaking right.

In the broadband cluster communication system based on the long-term evolution technology, users without speaking right in a group call spread across more than one cell, a set of downlink shared channel resources are established in each cell, all the users without speaking right in the cell monitor the channel to receive signaling, voice, video and other multimedia broadband services, the downlink shared channel resources are established for the users without speaking right in a group call when establishing the group call or when a user without speaking right pages, responds to, and accesses a cell which is not established with the resources, and initiates a release when the group releases.

In the related broadband cluster communication system, if all the users in the cell where the users without speaking right are located exited the group call or moved to other cells, that is, currently there are no users in the original cell, but only after the group call is released can the resources in the cell be released, therefore there is a waste of cell resources; in another aspect, if the users without speaking right in the current cell detect that another cell which is not established with the group resources is more suitable to them and wish to initiate a handover, while the handover cannot be performed because the target cell is not established with the group cluster resources, the call will be dropped.

Therefore, the related broadband cluster communication system has the defect that the group resources cannot be dynamically established and released.

### Summary of the Invention

The embodiment of the present invention provides a resource release method and a resource establishment method of a broadband cluster communication system, a terminal and a base station in the broadband cluster communication system, and the broadband cluster communication system to dynamically release and establish group resources in the broadband cluster communication system.

The embodiment of the present invention provides a resource release method of a broadband cluster communication system, and the method comprises:
a user which accesses a group call but has no speaking right reporting a terminal state to a base station; and
according to a terminal state reporting situation of users without speaking right in a cell where group resources have been established, the base station judging whether there are users without speaking right in the cell or not, and if no, releasing downlink shared channel resources shared by all the users without speaking right in the cell.

Alternatively, the method further comprises the following feature:
according to the terminal state reporting situation of the users without speaking right in a cell where group resources have been established, the base station judging whether there are users without speaking right in the cell or not comprises:
   if no terminal state reporting message is received from any user without speaking right in the cell where the group resources have been established in a predetermined measurement period, the base station determining that there are no users without speaking right in the cell; and
   if a terminal state reporting message is received from at least one user without speaking right in the cell where the group resources have been established in a predetermined measurement period, the base station determining that there are users without speaking right in the cell.

Alternatively, the method further comprises the following feature:
a user which accesses a group call but has no speaking right reporting a terminal state message to the base station comprises:
   a user which accesses a group call but has no speaking right periodically reporting a terminal state message to the base station in accordance with a reporting period pre-agreed with the base station;
   or, after receiving a reporting configuration message sent by the base station, the user which accesses the group call but has no speaking right reporting a terminal state to the base station according to a reporting instruction in the reporting configuration message.

Alternatively, the method further comprises the following feature:
the user which accesses the group call but has no speaking right reporting a terminal state to the base station according to a reporting instruction in the reporting configuration message comprises any one of the following:
   the user which accesses the group call but has no speaking right immediately reporting the terminal state after receiving the reporting configuration message; and
   after receiving the reporting configuration message, the user which accesses the group call but has no speaking right periodically reporting the terminal state according to a reporting interval indicated in the reporting configuration message.

Alternatively, the method further comprises the following feature:
the broadband cluster communication system is a broadband cluster communication system based on the Long Term Evolution (LTE) technology.

The embodiment of the present invention further provides a resource establishment method of a broadband cluster communication system, comprising:
a user which accesses a group call but has no speaking right sending a handover request message to a home base station, wherein the message carries information of a target cell where group resources are requested to establish; and
the home base station of the user without speaking right receiving a handover request message sent by the user without speaking right, judging whether the target cell where the group resources are requested to establish is a cell in the local base station or not, if it is a cell in the local base station, establishing the group resources of the group call for the target cell in the base station, and after the establishment is successful, sending the target cell group resource configuration information to the user without speaking right; if it is not a cell in the base station, notifying the home base station of the target cell to establish the group resources of the group call for the target cell, receiving the target cell group resource configuration information sent by the home base station of the target cell and forwarding it to the user without speaking right.

Alternatively, the method further comprises the following feature:
the user which accesses the group call but has no speaking right sending a handover request message, wherein the message carries information of the target cell where the group resources are requested to establish, to the current home base station comprises:
   the user which accesses the group call but has no speaking right querying a locally stored list of cells which have been established with the group resources in the group call, and if the target cell to which the local terminal is to switch is not in the cell list, determining that the target cell to which the terminal is to switch is not established with the group resources of the group call; and
   the user which accesses the group call but has no speaking right sending a handover request message to a home base station, wherein the message carries information of one or more target cells which request for establishing the group resources.

Alternatively, the method further comprises the following feature:
if determining that the target cell where the group resources are requested to establish is a cell in the local base station, the home base station of the user without speaking right establishes the group resources of the group call for the target cell in the local base station, and after the establishment is successful, sends the target cell group resource configuration information to the user without speaking right, comprising any one of the following:
   if determining that the target cell is a cell in the local base station, the home base station of the user without speaking right judging whether the target cell meets a handover condition or not, and if yes, establishing the group resources of the group call in the target cell, and after the establishment is successful, sending the target cell group resource configuration information to the user without speaking right; and
   if determining that the target cell is a cell in the local base station, the home base station of the user without speaking right judging whether the target cell meets the handover conditions or not, and if yes, sending a resource establishment request to a PTT dispatching server (PDS), wherein the request carries an identification of the home base station of the target cell and an identification of the target cell;
   the PDS receiving the resource establishment request sent by the home base station of the user without speaking right, and sending a resource establishment response to the base station, wherein the response carries resource establishment instruction information;
   after receiving the resource establishment response sent by the PDS, the home base station of the user without speaking right establishing the group resources of the group call in the target cell according to the resource establishment instruction information, and after the establishment is successful, sending the target cell group resource configuration information to the user without speaking right.

Alternatively, the method further comprises the following feature:
if determining that the target cell is not a cell in the local base station, the home base station of the user without speaking right notifies the home base station of the target cell to establish the group resources of the group call for the target cell, receives the target cell group resource configuration information sent by the home base station of the target cell and forwards it to the user without speaking right, comprising any one of the following:
   if determining that the target cell is a cell in the local base station, the home base station of the user without speaking right judging whether the target cell meets the handover conditions or not, and if yes, sending a resource establishment request to a PTT dispatching server (PDS), wherein the request carries the identification of the home base station of the target cell and the identification of the target cell;
   after receiving the resource establishment request sent by the home base station of the user without speaking right, the PDS notifying the home base station of the target cell to establish the group resources of the group call for the target cell, wherein the request carries the resource establishment instruction information;
   after receiving the notification from the PDS, the home base station of the target cell establishing the group resources of the group call for the target cell in accordance with the resource establishment instruction information, and after the establishment is successful, sending the target cell group resource configuration information to the PDS;
   the PDS receiving and forwarding the target cell group resource configuration information to the home base station of the user without speaking right, then the home base station of the user without speaking right forwarding the group resource configuration information to the user without speaking right; and
   if determining that the target cell is not a cell in the local base station, the home base station of the user without speaking right judging whether the target cell meets the handover conditions or not, and if yes, sending a resource establishment request to the home base station of the target cell, wherein the request carries the identification of the home base station of the target cell and the identification of the target cell;
   after receiving the resources establishment request, the home base station of the target cell judging whether the local base station established the group resources for the group call in cells other than the target cell or not, and if yes, directly establishing the group resources of the group call for the target cell; if no, then forwarding the resource establishment request to the PDS; after receiving the resource establishment request sent by the home base station of the target cell, the PDS sending a resource establishment response to the home base station of the target cell, wherein the response carries the resource establishment instruction information; after receiving the resource establishment response from the PDS, the home base station of the target cell establishing the group resources of the group call in the target cell according to the resource establishment instruction information; and after successfully establishing the group resources in the target cell, sending the target cell group resource configuration information to the home base station of the user without speaking right, then the home base station of the user without speaking right forwarding the target cell group resource configuration information to the user without speaking right.

Alternatively, the method further comprises the following feature:
after receiving the target cell group resource configuration information, the user without speaking right initiates a handover.

Alternatively, the method further comprises the following feature:
the handover conditions comprise: the target cell being a cell adjacent to the home cell of the user without speaking right, and the target cell supporting the cluster capability.

Alternatively, the method further comprises the following feature:
the broadband cluster communication system is a broadband cluster communication system based on the Long Term Evolution technology.

The embodiment of the present invention further provides a terminal in a broadband cluster communication system, comprising:
a detecting module, configured to detect whether a local terminal is a user without speaking right in a group call or not, and if yes, notify a reporting module; and
the reporting module, which is configured to report a terminal state to a base station.

Alternatively, the terminal further comprises the following feature:
the reporting module reports the terminal state to the base station in the following manner:
   the reporting module periodically reporting a terminal state message to the base station in accordance with a reporting period pre-agreed with the base station, or after receiving a reporting configuration message sent by the base station, the reporting module reporting the terminal state to the base station according to a reporting instruction in the reporting configuration message.

The embodiment of the present invention further provides a base station in a broadband cluster communication system, comprising:
a judging module, which is configured to, according to the terminal state reporting situation of users without speaking right in a cell where the group resources have been established, judge whether there are users without speaking right in the cell or not, and if no, notify a resource releasing module; and
the resource releasing module, which is configured to release downlink shared channel resources shared by all the users without speaking right in the cell.

Alternatively, the base station further comprises the following feature:
according to the terminal state reporting situation of the users without speaking right in a cell where is established with the group resources, the judging module judges whether there are users without speaking right in the cell or not in the following manner:
   if no terminal state reporting message is received from any user without speaking right in the cell where the group resources have been established in a predetermined measurement period, the judging module determining that there are no users without speaking right in the cell; and
   if a terminal state reporting message is received from at least one user without speaking right in the cell where the group resources have been established in the predetermined measurement period, the judging module determining that there are users without speaking right in the cell.

Alternatively, the base station further comprises the following feature:
the broadband cluster communication system is a broadband cluster communication system based on the Long Term Evolution technology.

The embodiment of the present invention further provides a terminal in a broadband cluster communication system, comprising:
a detecting module, configured to detect whether the local terminal is a user without speaking right in a group call or not, and if yes, notify a reporting module; and
the reporting module, which is configured to send a handover request message to a home base station of the local terminal, wherein the message carries information of a target cell where the group resources are requested to establish.

Alternatively, the terminal further comprises the following feature:
the terminal further comprises a handover module;
a reporting module is configured to send a handover request message to the current home base station, wherein the message carries information of the target cell where the group resources are requested to establish, and after that, notify the handover module; and
the handover module is configured to, after receiving the notification from the reporting module, initiate a handover after receiving the target cell group resource configuration information.

Alternatively, the terminal further comprises the following feature:
the reporting module sends a handover request message, which carries information of the target cell where the group resources are requested to establish, to the home base station of the local terminal in the following manner:
   the reporting module querying a locally stored list of cells which are established with the group resources of the group call, if the target cell to which the local terminal is to switch is not in the cell list, determining that the target cell to which the terminal is to switch is not established with the group resources of the group call; and sending a handover request message to the home base station, wherein the message carries information of one or more target cells which request for establishing the group resources.

The embodiment of the present invention further provides a broadband cluster communication system, comprising:
a base station, which is configured to judge whether it receives a handover request message sent by the user without speaking right in the local base station or not, and if yes, judge whether the target cell where the group resources are requested to establish is a cell in the local base station or not, if it is a cell in the local base station, establish group resources of the group call for the target cell in the local base station, after the establishment is successful, send the target cell group resource configuration information to the user without speaking right; if it is not a cell in the base station, notify the home base station of the target cell to establish the group resources of the group call for the target cell, receive the target cell group resource configuration information sent by the home base station of the target cell and forward it to the user without speaking right.

Wherein, the handover request message carries information of the target cell in which the user without speaking right requests for establishing the group resources.

Alternatively, the system further comprises the following feature:
if determining that the target cell where the group resources are requested to establish is a cell in the local base station, the home base station of the user without speaking right establishes the group resources of the group call for the target cell in the local base station, and after the establishment is successful, sends the target cell group resource configuration information to the user without speaking right, comprising any one of the following ways:
   if determining that the target cell is not a cell in the local base station, the home base station of the user without speaking right judging whether the target cell meets handover conditions or not, if yes, establishing the group resources of the group call in the target cell, and after the establishment is successful, sending the target cell group resource configuration information to the user without speaking right; and
   if determining that the target cell is a cell in the local base station, the home base station of the user without speaking right judging whether the target cell meets the handover conditions or not, if yes, sending a resource establishment request to a PTT dispatching server (PDS), wherein the request carries an identification of the home base station of the target cell and an identification of the target cell;
   after receiving the resource establishment request sent by the home base station of the user without speaking right, the PDS sending a resource establishment response to the home base station, wherein the response carries resource establishment instruction information;
   after receiving the resource establishment response from the PDS, the home base station of the target cell establishing the group resources of the group call in the target cell in accordance with the resource establishment instruction information, and after the establishment is successful, sending the target cell group resource configuration information to the user without speaking right;

Alternatively, the system further comprises the following feature:
if determining that the target cell is not a cell in the local base station, the home base station of the user without speaking right notifies the home base station of the target cell to establish the group resources of the group call for the target cell, receives the target cell group resource configuration information sent by the home base station of the target cell and forwards it to the user without speaking right, comprising any one of the following ways:
   if determining that the target cell is not a cell in the local base station, the home base station of the user without speaking right judging whether the target cell meets the handover conditions or not, and if yes, sends a resource establishment request to a PTT dispatching server (PDS), wherein the request carries the identification of the home base station of the target cell and the identification of the target cell;
   after receiving the resource establishment request sent by the home base station of the user without speaking right, the PDS notifying the home base station of the target cell to establish the group resources of the group call for the target cell, wherein the request carries the resource establishment instruction information;
   after receiving the notification from the PDS, the home base station of the target cell establishing the group resources of the group call for the target cell in accordance with the resource establishment instruction information, and after the establishment is successful, sending the target cell group resource configuration information to the PDS;
   the PDS receiving and forwarding the target cell group resource configuration information to the home base station of the user without speaking right, then the home base station of the user without speaking right forwarding the group resource configuration information to the user without speaking right; and
   b) if determining that the target cell is a cell in the local base station, the home base station of the user without speaking right judging whether the target cell meets the handover conditions or not, and if yes, sending a resource establishment request to the home base station of the target cell, wherein the request carries the identification of the home base station of the target cell and the identification of the target cell;
   after receiving the resources establishment request, the home base station of the target cell judging whether the local base station established group resources for the group call in cells other than the target cell or not, and if yes, directly establishing the group resources of the group call for the target cell; and if no, forwarding the resource establishment request to the PDS; after receiving the resource establishment request sent by the home base station of the target cell, the PDS sending a resource establishment response to the home base station of the target cell, wherein the response carries the resource establishment instruction information; after receiving the resource establishment response from the PDS, the home base station of the target cell establishing the group resources of the group call in the target cell according to the resource establishment instruction information; after successfully establishing the group resources under the target cell, sending the target cell group resource configuration information to the home base station of the user without speaking right, then the home base station of the user without speaking right forwarding the target cell group resource configuration information to the user without speaking right.

Alternatively, the system further comprises the following feature:
the handover conditions comprise: the target cell being a cell adjacent to the cell in which the user without speaking right is located, and the target cell supporting the cluster capability.

Alternatively, the system further comprises the following feature:
the broadband cluster communication system is a broadband cluster communication system based on the Long Term Evolution technology.

Compared with the related art, in a resource release method and a resource establishment method of a broadband cluster communication system, a terminal and a base station in the broadband cluster communication system, and the broadband cluster communication system provided in the embodiment of the present invention, a user without speaking right reports the terminal state to the base station, and the base station judges whether there are users without speaking right in the cell or not according to the terminal state reporting situation, and if no, releases the resources. The user without speaking right sends a handover request message to the base station when the user is to switch to a cell which is not established with the group resources, wherein the message carries information of the target cell, and if the target cell is in the base station, establishes resources for the target cell in this base station, and if the target cell is not in the base station, notifies the home base station of the target cell to establish resources for it, and after the resource establishment is successful, sends the resource configuration information to the user without speaking right. The embodiment of the present invention can dynamically release and establish group resources in the broadband cluster communication system.

### Brief Description of the Drawings

FIG. 1 is a schematic diagram of a broadband cluster communication system in the prior art;
FIG. 2 is a flow chart of a resource release method of a broadband cluster communication system in accordance with an embodiment of the present invention;
FIG. 3 is a flow chart of a resource establishment method of a broadband cluster communication system in accordance with an embodiment of the present invention;
FIG. 4 is a schematic diagram of the structure of a terminal (reporting the terminal state) in the broadband cluster communication system in accordance with an embodiment of the present invention;
FIG. 5 is a schematic diagram of the structure of a base station (dynamic releasing the resources) in the broadband cluster communication system in accordance with an embodiment of the present invention;
FIG. 6 is a schematic diagram of the structure of a terminal (reporting a handover request) in the broadband cluster communication system in accordance with an embodiment of the present invention;
FIG. 7 is a schematic diagram of the structure of a broadband cluster communication system in accordance with an embodiment of the present invention.

### Preferred Embodiments of the Invention

Hereinafter, in conjunction with the accompanying drawings, the embodiments of the present invention will be described in detail. It should be noted that, in the case of no conflict, embodiments and features in the embodiments of the present application may be arbitrarily combined with each other.

As shown in FIG. 2, the embodiment of the present invention provides a resource release method of a broadband cluster communication system, and the method comprises:
in S201, a user which accesses a group call but has no speaking right reports a terminal state to a base station;
in S202, according to the terminal state reporting situation of users without speaking right in a cell where the group resources have been established, the base station judges whether there are users without speaking right in the cell or not, and if yes, releases downlink shared channel resources shared by all the users without speaking right in the cell.

The method further comprises the following feature:
wherein, according to the terminal state reporting situation of users without speaking right in a cell where the group resources have been established, the base station judging whether there are users without speaking right in the cell or not comprises:
   if no terminal state reporting message is received from any user without speaking right in the cell where the group resources have been established in a predetermined measurement period, the base station determining that there are no users without speaking right in the cell;
   if the base station receives a terminal state reporting message from at least one user without speaking right in the cell where the group resources have been established in a predetermined measurement period, the base station determining that there are users without speaking right in the cell.

Wherein, a user which accesses a group call but has no speaking right reporting a terminal state messages to the base station comprises:
the user which accesses the group call but has no speaking right periodically reporting a terminal state message to the base station in accordance with a reporting period pre-agreed with the base station; or, after receiving a reporting configuration message sent by the base station, the user which accesses the group call but has no speaking right reporting the terminal state to the base station according to a reporting instruction in the reporting configuration message.

Wherein, the user which accesses the group call but has no speaking right reports a terminal state according to a reporting instruction in the reporting configuration message, comprising any one of the following:
a) the user which accesses the group call but has no speaking right immediately reporting the terminal state once receiving the reporting configuration message;
b) after receiving the reporting configuration message, the user which accesses the group call but has no speaking right reporting the terminal state periodically according to the reporting interval indicated in the reporting configuration message.

Wherein, the broadband cluster communication system is a broadband cluster communication system based on the Long Term Evolution (LTE) technology.

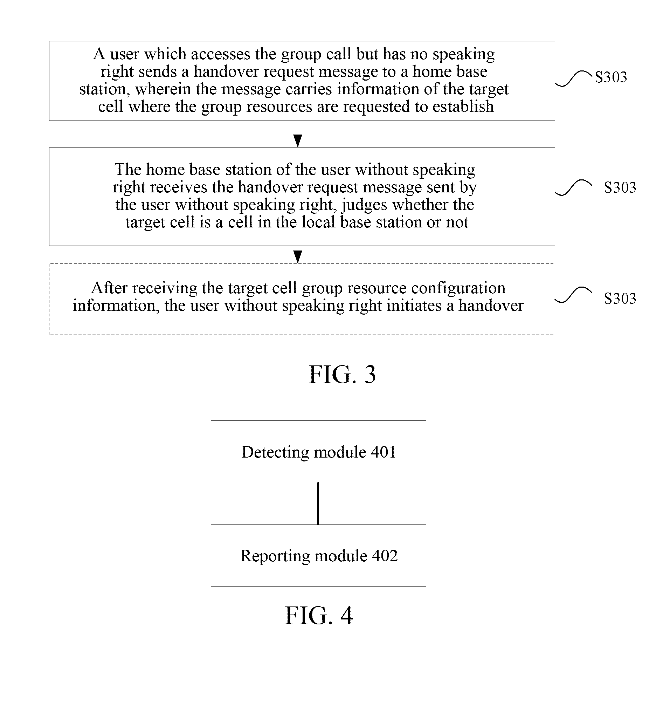

As shown in FIG. 3, the embodiment of the present invention provides a resource establishment method of a broadband cluster communication system, and the method comprises:
in S301, a user which accesses the group call but has no speaking right sends a handover request message to a home base station, wherein the message carries information of the target cell where the group resources are requested to establish;
in S302, the home base station of the user without speaking right receives a handover request message sent by the user without speaking right, judges whether the target cell is a cell in the local base station or not, if it is a cell in the local base station, establishes the group resources of the group call for the target cell in the base station, and after the establishment is successful, sends the target cell group resource configuration information to the user without speaking right; if it is not a cell in the base station, notifies the home base station of the target cell to establish the group resources of the group call for the target cell, receives the target cell group resource configuration information sent by the home base station of the target cell and forwards it to the user without speaking right.

The method further comprises the following feature:
wherein, after step 302, it further comprises:
   in S303, after receiving the target cell group resource configuration information, the user without speaking right initiates a handover.

Wherein, the user which accesses the group call but has no speaking right sends a handover request message to the home base station, wherein the message carries information of the target cell where the group resources are requested to establish, comprising:
the user which accesses the group call but has no speaking right querying a locally stored list of cells which are established with the group resources in the group call, if the target cell to which the local terminal is to switch is not in the cell list, determining that the target cell to which the terminal is to switch is not established with the group resources of the group call;
the user which accesses the group call but has no speaking right sending a handover request message to the home base station, wherein the message carries information of one or more target cells which request for establishing the group resources.

Wherein, if determining that the target cell is a cell in the local base station, the home base station of the user without speaking right establishes the group resources of the group call for the target cell in the local base station, and after the establishment is successful, sends the target cell group resource configuration information to the user without speaking right, comprising any one of the following ways:
a) if determining that the target cell is a cell in the local base station, the home base station of the user without speaking right judging whether the target cell meets the handover conditions or not, and if yes, establishing the group resources of the group call for the target cell, and after the establishment is successful, sending the target cell group resource configuration information to the user without speaking right;
b) if determining that the target cell is a cell in the local base station, the home base station of the user without speaking right judging whether the target cell meets the handover conditions or not, and if yes, sending a resource establishment request to a PTT dispatching server (PDS), wherein the request carries the identification of the home base station of the target cell and the identification of the target cell;
the PDS receiving the resource establishment request sent by the home base station of the user without speaking right, and sending a resource establishment response to the base station, wherein the response carries the resource establishment instruction information;
after receiving the resource establishment response from the PDS, the home base station of the user without speaking right establishing the group resources of the group call in the target cell according to the resource establishment instruction information, and after the establishment is successful, sending the target cell group resource configuration information to the user without speaking right.

Wherein, if determining that the target cell is not a cell in the local base station, the home base station of the user without speaking right notifies the home base station of the target cell to establish the group resources of the group call for the target cell, receives the target cell group resource configuration information sent by the home base station of the target cell and forwards it to the user without speaking right, comprising any one of the following ways:
a) if determining that the target cell is a cell in the local base station, the home base station of the user without speaking right judging whether the target cell meets the handover conditions or not, and if yes, sending a resource establishment request to the PTT dispatching server (PDS), wherein the request carries the identification of the home base station of the target cell and the identification of the target cell;
after receiving the resource establishment request sent by the home base station of the user without speaking right, the PDS notifying the home base station of the target cell to establish the group resources of the group call for the target cell, wherein the request carries the resource establishment instruction information;
after receiving the notification from the PDS, the home base station of the target cell establishing the group resources of the group call for the target cell in accordance with the resource establishment instruction information, and after the establishment is successful, sending the target cell group resource configuration information to the PDS;
the PDS receiving and forwarding the target cell group resource configuration information to the home base station of the user without speaking right, then the home base station of the user without speaking right forwarding it to the user without speaking right;
b) if determining that the target cell is a cell in the local base station, the home base station of the user without speaking right judging whether the target cell meets the handover conditions or not, and if yes, sending a resource establishment request to the home base station of the target cell, wherein the request carries the identification of the home base station of the target cell and the identification of the target cell;
after receiving the resources establishment request, the home base station of the target cell judging whether the local base station established the group resources for the group call in cells other than the target cell or not, and if yes, directly establishing the group resources of the group call for the target cell; if no, then forwarding the resource establishment request to the PDS; after receiving the resource establishment request sent by the home base station of the target cell, the PDS sending a resource establishment response to the home base station of the target cell, wherein the response carries the resource establishment instruction information; after receiving the resource establishment response from the PDS, the home base station of the target cell establishing the group resources of the group call in the target cell according to the resource establishment instruction information; and after successfully establishing the group resources in the target cell, sending the target cell group resource configuration information to the home base station of the user without speaking right, then the home base station of the user without speaking right forwarding it to the user without speaking right.

Wherein, the handover conditions comprise: the target cell being a cell adjacent to the cell in which the user without speaking right is located, and the target cell supporting the cluster capability.

Wherein, the home base station of the user without speaking right sending the target cell group resource configuration information to the user without speaking right may send the information through the way of single-cast or broadcast.

Wherein, the broadband cluster communication system is a broadband cluster communication system based on the Long Term Evolution technology.

As shown in FIG. 4, the embodiment of the present invention provides a terminal in a broadband cluster communication system, comprising:
detecting module 401, used to detect whether the local terminal is a user without speaking right in a group call or not, and if yes, notify a reporting module;
reporting module 402, used to report a terminal state to the base station.

The terminal further comprises the following feature:
wherein, the reporting module 402 reporting the terminal state to the base station comprises:
   the reporting module 402 periodically reporting a terminal state message to the base station in accordance with a reporting period pre-agreed with the base station, or after receiving a reporting configuration message sent by the base station, the reporting module reporting the terminal state to the base station according to a reporting instruction in the reporting configuration message.

Wherein, the broadband cluster communication system is a broadband cluster communication system based on the Long Term Evolution technology.

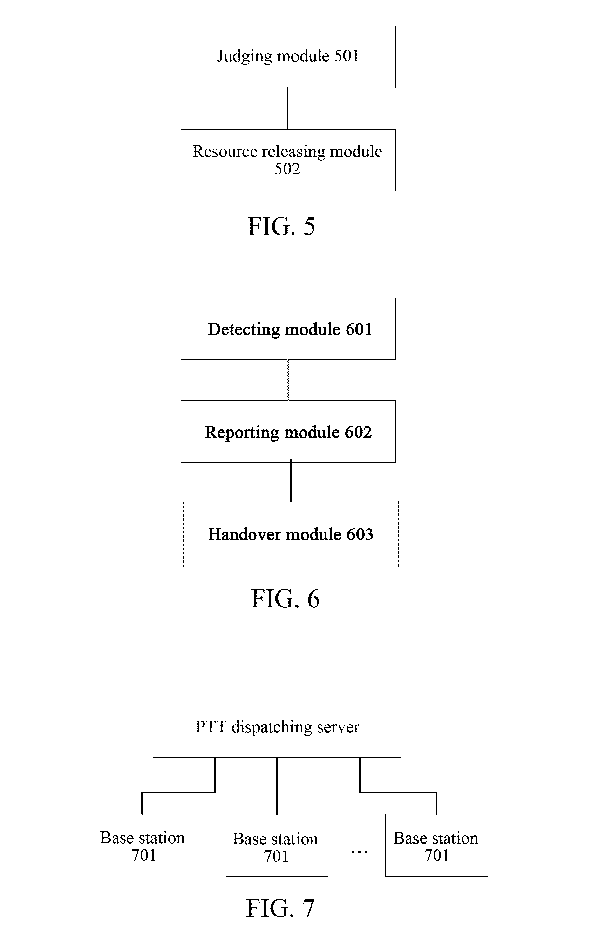

As shown in FIG. 5, the embodiment of the present invention further provides a base station in a broadband cluster communication system, comprising:
judging module 501, used to, according to the terminal state reporting situation of the user without speaking right in a cell where the group resources have been established, judge whether there are users without speaking right in the cell or not, and if yes, notify a resource releasing module;
resource releasing module 502, used to release downlink shared channel resources shared by all users without speaking right in the cell.

The base station further comprises the following feature:
wherein, according to the terminal state reporting situation of the user without speaking right in a cell where the group resources have been established, the judging module 501 judging whether there are users without speaking right in a cell or not comprises:
   if no terminal state reporting message is received from any user without speaking right in the cell where the group resources have been established in a predetermined measurement period, the judging module 501 determining that there is no user with speaking right in the cell; and
   if a terminal state reporting message is received from at least one of the users without speaking right in the cell where the group resources have been established in the predetermined measurement period, the judging module 501 determining that there are users with speaking right in the cell;
   wherein, the broadband cluster communication system is a broadband cluster communication system based on the Long Term Evolution technology.

As shown in FIG. 6, the embodiment of the present invention provides a terminal in a broadband cluster communication system, comprising:
detecting module 601, used to detect whether the local terminal is a user without speaking right in a group call or not, and if yes, notify a reporting module; and
reporting module 602, used to send a handover request message to a home base station of the local terminal, wherein the message carries information of the a target cell where the group resources are requested to establish.

The terminal further comprises the following feature:
wherein, the terminal further comprises handover module 603;
the reporting module 602 is used to send a handover request message to the current home base station, wherein the message carries information of the target cell where the group resources are requested to establish, and after that, notify the handover module;
the handover module 603 is used to, after receiving the notification from the reporting module, initiate a handover if receiving the target cell group resource configuration information.

Wherein, the reporting module 602 sending the handover request message, which carries information of the target cell where the group resources are requested to establish, to the home base station comprises:
the reporting module 602 querying a locally stored list of cells which are established with the group resources in the group call, if the target cell to which the local terminal is to switch is not in the cell list, determining that the target cell to which the terminal is to switch is not established with the group resources of the group call; and sending a handover request message to the home base station, wherein the message carries information of one or more target cells which request for establishing the group resources.

Wherein, the broadband cluster communication system is a broadband cluster communication system based on the Long Term Evolution technology.

As shown in FIG. 7, the embodiment of the present invention provides a broadband cluster communication system, comprising:
base station 701, used to judge whether it receives a handover request message sent by the user without speaking right in the local base station or not, and if yes, judge whether the target cell where the group resources are requested to establish is a cell in the local base station or not, if it is a cell in the local base station, establish the group resources of the group call for the target cell in the base station, after the establishment is successful, send the target cell group resource configuration information to the user without speaking right; if it is not a cell in the base station, notify the home base station of the target cell to establish the group resources of the group call for the target cell, receive the target cell group resource configuration information sent by the home base station of the target cell and forward it to the user without speaking right.

Wherein, the handover request message carries the information of the target cell for which the user without speaking right requests for establishing the group resources.

The system further comprises the following feature:
wherein, if determining that the target cell where the group resources are requested to establish is a cell in the local base station, the home base station of the user without speaking right establishes the group resources of the group call for the target cell in the local base station, and after the establishment is successful, sends the target cell group resource configuration information to the user without speaking right, comprising any one of the following ways:
   a) if determining that the target cell is a cell in the local base station, the home base station of the user without speaking right judging whether the target cell meets the handover conditions or not, and if yes, establishing the group resources of the group call in the target cell, and after the establishment is successful, sending the target cell group resource configuration information to the user without speaking right;
   b) if determining that the target cell is a cell in the local base station, the home base station of the user without speaking right judging whether the target cell meets the handover conditions or not, and if yes, sending a resource establishment request to a PTT dispatching server (PDS), wherein the request carries the identification of the home base station of the target cell and the identification of the target cell;
after receiving the resource establishment request sent by the home base station of the user without speaking right, the PDS sending a resource establishment response to the home base station, wherein the response carries the resource establishment instruction information;
after receiving the resource establishment response from the PDS, the home base station of the target cell establishing the group resources of the group call in the target cell in accordance with the resource establishment instruction information, and after the establishment is successful, sending the target cell group resource configuration information to the user without speaking right;
wherein, if determining that the target cell is not a cell in the local base station, the home base station of the user without speaking right notifies the home base station of the target cell to establish the group resources of the group call for the target cell, receives the target cell group resource configuration information sent by the home base station of the target cell and forwards it to the user without speaking right, comprising any one of the following ways:
   a) if determining that the target cell is not a cell in the local base station, the home base station of the user without speaking right judging whether the target cell meets the handover conditions or not, and if yes, sending a resource establishment request to a PTT dispatching server (PDS), wherein the request carries the identification of the home base station of the target cell and the identification of the target cell;
after receiving the resource establishment request sent by the home base station of the user without speaking right, the PDS notifying the home base station of the target cell to establish the group resources of the group call for the target cell, wherein the request carries the resource establishment instruction information;
after receiving the notification from the PDS, the home base station of the target cell establishing the group resources of the group call for the target cell in accordance with the resource establishment instruction information, and after the establishment is successful, sending the target cell group resource configuration information to the PDS;
the PDS receiving and forwarding the target cell group resource configuration information to the home base station of the user without speaking right, then the home base station of the user without speaking right forwarding it to the user without speaking right;
   b) if determining that the target cell is not a cell in the local base station, the home base station of the user without speaking right judging whether the target cell meets the handover conditions or not, and if yes, sending a resource establishment request to the home base station of the target cell, wherein the request carries the identification of the home base station of the target cell and the identification of the target cell;
after receiving the resources establishment request, the home base station of the target cell judging whether the local base station established the group resources for the group call in cells other than the target cell or not, and if yes, directly establishing the group resources of the group call for the target cell; if no, then forwarding the resource establishment request to the PDS; after receiving the resource establishment request sent by the home base station of the target cell, the PDS sending a resource establishment response to the home base station of the target cell, wherein the response carries the resource establishment instruction information; after receiving the resource establishment response from the PDS, the home base station of the target cell establishing the group resources of the group call in the target cell according to the resource establishment instruction information; and after successfully establishing the group resources in the target cell, sending the target cell group resource configuration information to the home base station of the user without speaking right, then the home base station of the user without speaking right forwarding it to the user without speaking right.

Wherein, the handover conditions comprise: the target cell being a cell adjacent to the cell in which the user without speaking right is located, and the target cell supporting the cluster capability.

Wherein, the broadband cluster communication system is a broadband cluster communication system based on the Long Term Evolution technology.

The abovementioned embodiment provides a resource release method and a resource establishment method, a terminal and a base station in a broadband cluster communication system, as well as the broadband cluster communication system, wherein a user without speaking right reports a terminal state to a base station, the base station judges whether there are users without speaking right in the cell or not according to the terminal state reporting situation, and if no, releases the resources. A handover request message is sent to the base station when a user without speaking right is to switch to a cell which is not established with the group resources, wherein the message carries information of the target cell, and if the target cell is in the local base station, the resources are established for the target cell in the local base station, and if the target cell is not in the base station, the home base station of the target cell is notified to establish resources for it, after the resource establishment is successful, the resource configuration information is sent to the user without speaking right. The embodiment of the present invention can dynamically release and establish the group resources in the broadband cluster communication system.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

It should be noted that the present invention may have a variety of other embodiments, and without departing from the spirit and essence of the present invention, those skilled in the art can make various appropriate changes and modifications according to the present invention, and these appropriate changes and modifications should fall within the protection scope of the appended claims of the present invention.

### Industrial Applicability

The embodiments of the present invention can dynamically release and establish group resources in the broadband cluster communication system.

## Claims

1. A resource release method of a broadband cluster communication system, comprising:
a user which accesses a group call but has no speaking right reporting a terminal state to a base station; and
according to a terminal state reporting situation of users without speaking right in a cell where group resources have been established, the base station judging whether there are users without speaking right in the cell or not, and if no, releasing downlink shared channel resources shared by all the users without speaking right in the cell.

2. The method of claim 1, wherein:
according to the terminal state reporting situation of the users without speaking right in a cell where group resources have been established, the base station judging whether there are users without speaking right in the cell or not comprises:
if no terminal state reporting message is received from any user without speaking right in the cell where the group resources have been established in a predetermined measurement period, the base station determining that there are no users without speaking right in the cell; and
if a terminal state reporting message is received from at least one user without speaking right in the cell where the group resources have been established in a predetermined measurement period, the base station determining that there are users without speaking right in the cell.

3. The method of claim 1, wherein:
a user which accesses a group call but has no speaking right reporting a terminal state message to the base station comprises:
a user which accesses a group call but has no speaking right periodically reporting a terminal state message to the base station in accordance with a reporting period pre-agreed with the base station;
or, after receiving a reporting configuration message sent by the base station, the user which accesses the group call but has no speaking right reporting a terminal state to the base station according to a reporting instruction in the reporting configuration message.

4. The method of claim 3, wherein:
the user which accesses the group call but has no speaking right reporting a terminal state to the base station according to a reporting instruction in the reporting configuration message comprises any one of the following:
the user which accesses the group call but has no speaking right immediately reporting the terminal state after receiving the reporting configuration message; and
after receiving the reporting configuration message, the user which accesses the group call but has no speaking right periodically reporting the terminal state according to a reporting interval indicated in the reporting configuration message.

5. The method of any one of claims 1-4, wherein:
the broadband cluster communication system is a broadband cluster communication system based on the Long Term Evolution (LTE) technology.

6. A resource establishment method of a broadband cluster communication system, comprising:
a user which accesses a group call but has no speaking right sending a handover request message to a home base station, wherein the message carries information of a target cell where group resources are requested to establish; and
the home base station of the user without speaking right receiving a handover request message sent by the user without speaking right, judging whether the target cell where the group resources are requested to establish is a cell in the local base station or not, if it is a cell in the local base station, establishing the group resources of the group call for the target cell in the base station, and after the establishment is successful, sending the target cell group resource configuration information to the user without speaking right; if it is not a cell in the base station, notifying the home base station of the target cell to establish the group resources of the group call for the target cell, receiving the target cell group resource configuration information sent by the home base station of the target cell and forwarding it to the user without speaking right.

7. The method of claim 6, wherein:
the user which accesses the group call but has no speaking right sending a handover request message carrying information of the target cell where the group resources are requested to establish to the current home base station comprises:
the user which accesses the group call but has no speaking right querying a locally stored list of cells where the group resources have been established in the group call, and if the target cell to which the local terminal is to switch is not in the list, determining that the group resources of the group call have not been established in the target cell to which the terminal is to switch; and
the user which accesses the group call but has no speaking right sending a handover request message to a home base station, wherein the message carries information of one or more target cells which request for establishing the group resources.

8. The method of claim 6, wherein:
if determining that the target cell where the group resources are requested to establish is a cell in the local base station, the home base station of the user without speaking right establishes the group resources of the group call for the target cell in the local base station, and after the establishment is successful, sends the target cell group resource configuration information to the user without speaking right, comprising any one of the following ways:
if determining that the target cell is a cell in the local base station, the home base station of the user without speaking right judging whether the target cell meets a handover condition or not, and if yes, establishing the group resources of the group call in the target cell, and after the establishment is successful, sending the target cell group resource configuration information to the user without speaking right; and
if determining that the target cell is a cell in the local base station, the home base station of the user without speaking right judging whether the target cell meets the handover conditions or not, and if yes, sending a resource establishment request to a PTT dispatching server (PDS), wherein the request carries an identification of the home base station of the target cell and an identification of the target cell;
the PDS receiving the resource establishment request sent by the home base station of the user without speaking right, and sending a resource establishment response to the base station, wherein the response carries resource establishment instruction information;
after receiving the resource establishment response sent by the PDS, the home base station of the user without speaking right establishing the group resources of the group call in the target cell according to the resource establishment instruction information, and after the establishment is successful, sending the target cell group resource configuration information to the user without speaking right.

9. The method of claim 6, wherein:
if determining that the target cell is not a cell in the local base station, the home base station of the user without speaking right notifies the home base station of the target cell to establish the group resources of the group call for the target cell, receives the target cell group resource configuration information sent by the home base station of the target cell and forwards it to the user without speaking right, comprising any one of the following ways:
if determining that the target cell is a cell in the local base station, the home base station of the user without speaking right judging whether the target cell meets the handover conditions or not, and if yes, sending a resource establishment request to a PTT dispatching server (PDS), wherein the request carries the identification of the home base station of the target cell and the identification of the target cell;
after receiving the resource establishment request sent by the home base station of the user without speaking right, the PDS notifying the home base station of the target cell to establish the group resources of the group call for the target cell, wherein the request carries the resource establishment instruction information;
after receiving the notification from the PDS, the home base station of the target cell establishing the group resources of the group call for the target cell in accordance with the resource establishment instruction information, and after the establishment is successful, sending the target cell group resource configuration information to the PDS;
the PDS receiving and forwarding the target cell group resource configuration information to the home base station of the user without speaking right, then the home base station of the user without speaking right forwarding the group resource configuration information to the user without speaking right; and
if determining that the target cell is not a cell in the local base station, the home base station of the user without speaking right judging whether the target cell meets the handover conditions or not, and if yes, sending a resource establishment request to the home base station of the target cell, wherein the request carries the identification of the home base station of the target cell and the identification of the target cell;
after receiving the resources establishment request, the home base station of the target cell judging whether the local base station have established the group resources for the group call in cells other than the target cell or not, and if yes, directly establishing the group resources of the group call for the target cell; if no, then forwarding the resource establishment request to the PDS; after receiving the resource establishment request sent by the home base station of the target cell, the PDS sending a resource establishment response to the home base station of the target cell, wherein the response carries the resource establishment instruction information; after receiving the resource establishment response from the PDS, the home base station of the target cell establishing the group resources of the group call in the target cell according to the resource establishment instruction information; and after successfully establishing the group resources in the target cell, sending the target cell group resource configuration information to the home base station of the user without speaking right, then the home base station of the user without speaking right forwarding the target cell group resource configuration information to the user without speaking right.

10. The method of claim 6, wherein:
after receiving the target cell group resource configuration information, the user without speaking right initiates a handover.

11. The method of claim 8 or 9, wherein:
the handover conditions comprise: the target cell being a cell adjacent to the home cell of the user without speaking right, and the target cell supporting the cluster capability.

12. The method of any one of claims 6-10, wherein:
the broadband cluster communication system is a broadband cluster communication system based on the Long Term Evolution technology.

13. A terminal in a broadband cluster communication system, comprising:
a detecting module, configured to detect whether a local terminal is a user without speaking right in a group call or not, and if yes, notify a reporting module; and
the reporting module, which is configured to report a terminal state to a base station.

14. The terminal of claim 13, wherein:
the reporting module reports the terminal state to the base station in the following manner:
the reporting module periodically reporting a terminal state message to the base station in accordance with a reporting period pre-agreed with the base station, or after receiving a reporting configuration message sent by the base station, the reporting module reporting the terminal state to the base station according to a reporting instruction in the reporting configuration message.

15. A base station in a broadband cluster communication system, comprising:
a judging module, which is configured to, according to the terminal state reporting situation of users without speaking right in a cell where the group resources have been established, judge whether there are users without speaking right in the cell or not, and if no, notify a resource releasing module; and
the resource releasing module, which is configured to release downlink shared channel resources shared by all the users without speaking right in the cell.

16. The base station of claim 15, wherein:
according to the terminal state reporting situation of the users without speaking right in a cell where is established with the group resources, the judging module judges whether there are users without speaking right in the cell or not in the following manner:
if no terminal state reporting message is received from any user without speaking right in the cell where the group resources have been established in a predetermined measurement period, the judging module determining that there are no users without speaking right in the cell; and
if a terminal state reporting message is received from at least one user without speaking right in the cell where the group resources have been established in the predetermined measurement period, the judging module determining that there are users without speaking right in the cell.

17. The base station of any one of claims 15-16, wherein:
the broadband cluster communication system is a broadband cluster communication system based on the Long Term Evolution technology.

18. A terminal in a broadband cluster communication system, comprising:
a detecting module, configured to detect whether the local terminal is a user without speaking right in a group call or not, and if yes, notify a reporting module; and
the reporting module, which is configured to send a handover request message to a home base station of the local terminal, wherein the message carries information of a target cell where the group resources are requested to establish.

19. The terminal of claim 18, wherein:
the terminal further comprises a handover module;
the reporting module is configured to send a handover request message to the current home base station, wherein the message carries information of the target cell where the group resources are requested to establish, and after that, notify the handover module; and
the handover module is configured to, after receiving the notification from the reporting module, initiate a handover after receiving the target cell group resource configuration information.

20. The terminal of claim 18, wherein:
the reporting module sends a handover request message, which carries information of the target cell where the group resources are requested to establish, to the home base station of the local terminal in the following manner:
the reporting module querying a locally stored list of cells which are established with the group resources of the group call, if the target cell to which the local terminal is to switch is not in the list, determining that the target cell to which the terminal is to switch is not established with the group resources of the group call; and sending a handover request message to the home base station, wherein the message carries information of one or more target cells which request for establishing the group resources.

21. A broadband cluster communication system, comprising:
a base station, which is configured to judge whether it receives a handover request message sent by the user without speaking right in the local base station or not, and if yes, judge whether the target cell where group resources are requested to establish is a cell in the local base station or not, if it is a cell in the local base station, establish group resources of the group call for the target cell in the local base station, after the establishment is successful, send the target cell group resource configuration information to the user without speaking right; if it is not a cell in the base station, notify the home base station of the target cell to establish the group resources of the group call for the target cell, receive the target cell group resource configuration information sent by the home base station of the target cell and forward it to the user without speaking right;
wherein, the handover request message carries information of the target cell in which the user without speaking right requests for establishing the group resources.

22. The system of claim 21, wherein:
if determining that the target cell where the group resources are requested to establish is a cell in the local base station, the home base station of the user without speaking right establishes the group resources of the group call for the target cell in the local base station, and after the establishment is successful, sends the target cell group resource configuration information to the user without speaking right, comprising any one of the following ways:
if determining that the target cell is a cell in the local base station, the home base station of the user without speaking right judging whether the target cell meets handover conditions or not, if yes, establishing the group resources of the group call in the target cell, and after the establishment is successful, sending the target cell group resource configuration information to the user without speaking right; and
if determining that the target cell is a cell in the local base station, the home base station of the user without speaking right judging whether the target cell meets the handover conditions or not, if yes, sending a resource establishment request to a PTT dispatching server (PDS), wherein the request carries an identification of the home base station of the target cell and an identification of the target cell;
after receiving the resource establishment request sent by the home base station of the user without speaking right, the PDS sending a resource establishment response to the home base station, wherein the response carries resource establishment instruction information;
after receiving the resource establishment response from the PDS, the home base station of the target cell establishing the group resources of the group call in the target cell in accordance with the resource establishment instruction information, and after the establishment is successful, sending the target cell group resource configuration information to the user without speaking right.

23. The system of claim 21, wherein:
if determining that the target cell is not a cell in the local base station, the home base station of the user without speaking right notifies the home base station of the target cell to establish the group resources of the group call for the target cell, receives the target cell group resource configuration information sent by the home base station of the target cell and forwards it to the user without speaking right, comprising any one of the following ways:
if determining that the target cell is not a cell in the local base station, the home base station of the user without speaking right judging whether the target cell meets the handover conditions or not, and if yes, sends a resource establishment request to a PTT dispatching server (PDS), wherein the request carries the identification of the home base station of the target cell and the identification of the target cell;
after receiving the resource establishment request sent by the home base station of the user without speaking right, the PDS notifying the home base station of the target cell to establish the group resources of the group call for the target cell, wherein the request carries the resource establishment instruction information;
after receiving the notification from the PDS, the home base station of the target cell establishing the group resources of the group call for the target cell in accordance with the resource establishment instruction information, and after the establishment is successful, sending the target cell group resource configuration information to the PDS;
the PDS receiving and forwarding the target cell group resource configuration information to the home base station of the user without speaking right, then the home base station of the user without speaking right forwarding the group resource configuration information to the user without speaking right; and
if determining that the target cell is not a cell in the local base station, the home base station of the user without speaking right judging whether the target cell meets the handover conditions or not, and if yes, sending a resource establishment request to the home base station of the target cell, wherein the request carries the identification of the home base station of the target cell and the identification of the target cell;
after receiving the resources establishment request, the home base station of the target cell judging whether the local base station established group resources for the group call in cells other than the target cell or not, and if yes, directly establishing the group resources of the group call for the target cell; and if no, forwarding the resource establishment request to the PDS; after receiving the resource establishment request sent by the home base station of the target cell, the PDS sending a resource establishment response to the home base station of the target cell, wherein the response carries the resource establishment instruction information; after receiving the resource establishment response from the PDS, the home base station of the target cell establishing the group resources of the group call in the target cell according to the resource establishment instruction information; after successfully establishing the group resources under the target cell, sending the target cell group resource configuration information to the home base station of the user without speaking right, then the home base station of the user without speaking right forwarding the target cell group resource configuration information to the user without speaking right.

24. The system of claim 21, wherein:
the handover conditions comprise: the target cell being a cell adjacent to the cell in which the user without speaking right is located, and the target cell supporting the cluster capability.

25. The base station of any one of claims 21-24, wherein:
the broadband cluster communication system is a broadband cluster communication system based on the Long Term Evolution technology.
